# EUROPÄISCHE PATENTSCHRIFT

(11) **EP 1 697 493 B1**
(45) Veröffentlichungstag und Bekanntmachung des Hinweises auf die Patenterteilung: **02.07.2008**
(21) Anmeldenummer: 04804006.7
(22) Anmeldetag: 17.12.2004
(51) Int. Cl.: C12C 12/04, C12C 5/00, C12C 5/02

(54) **ALKOHOLARME BIERE ODER BIERAHNLICHE ERFRISCHUNFSGETRANKE MIT PALATINOSE**
LOW-ALCOHOL BEER OR BEER-LIKE REFRESHMENT BEVERAGES CONTAINING PALATINOSE
BIERES A FAIBLE TENEUR EN ALCOOL OU BOISSONS RAFRAICHISSANTES DE TYPE BIERE A BASE DE PALATINOSE

(30) Priorität: 19.12.2003 DE 10361313
(43) Veröffentlichungstag der Anmeldung: 06.09.2006
(60) Teilanmeldung: 08008978.2
(73) Patentinhaber: Südzucker Aktiengesellschaft Mannheim/Ochsenfurt, 68165 Mannheim (DE)
(72) Erfinder: KOWALCZYK, Jörg, 67304 Eisenberg-Steinborn (DE); DÖRR, Tillmann, 67591 Hohen-Sülzen (DE); GUDERJAHN, Lutz, 67591 Offstein (DE); EVERS, Hartmut, 55545 Bad Kreuznach (DE); NIELEBOCK, Jan-Karl, 44143 Dortmund (DE)
(74) Vertreter: Schwahn, Hartmut
(86) Internationale Anmeldenummer: PCT/EP2004/014402
(87) Internationale Veröffentlichungsnummer: WO 2005/061690

(56) Entgegenhaltungen:
- DE-A1- 2 212 263
- DE-A1- 2 344 252
- DE-C- 958 464
- GB-A- 2 388 027
- US-A- 4 929 452
- DATABASE WPI Section Ch, Week 198915 Derwent Publications Ltd., London, GB; Class B05, AN 1989-112222 XP002251923 & JP 01 060360 A (MITSUI SEITO KK) 7. März 1989 (1989-03-07)
- DATABASE WPI Section Ch, Week 200481 Derwent Publications Ltd., London, GB; Class D16, AN 2003-278602 XP002258689 & JP 2003 522321 T (SHIN MITSUI SUGAR CO LTD) 9. Dezember 2004 (2004-12-09) & WO 03/017788 A (SHIN MITSUI SUGAR CO., LTD; SHIMIZU, TAKEO; NAGAI, YUKIE; KASHIMURA, J) 6. März 2003 (2003-03-06)
- DATABASE WPI Section Ch, Week 198826 Derwent Publications Ltd., London, GB; Class B03, AN 1988-177707 XP002251924 & JP 63 112963 A (MITSUI SUGAR CO LTD) 18. Mai 1988 (1988-05-18)

## Beschreibung

Die vorliegende Erfindung stellt Verfahren zur Herstellung eines alkoholarmen oder alkoholfreien Bieres beziehungsweise eines bierähnlichen Erfrischungsgetränkes sowie ein unter Verwendung dieses Verfahren hergestelltes alkoholarmes oder alkoholfreies Bier beziehungsweise bierähnliches Erfrischungsgetränk bereit.

Seit Jahren geht der Trend beim Bierkonsum weg vom herkömmlichen Vollbier zu Getränken mit deutlich geringerem Alkoholgehalt. Dies zeigt sich beispielsweise daran, dass der Bierabsatz in Deutschland zurückgeht, während der Absatz von Biermischgetränken, Radlergetränken und Getränken mit niedrigerem Alkoholgehalt, insbesondere alkoholfreien Bieren ansteigt.

Biermischgetränke werden üblicherweise durch Mischen von Bier mit entsprechend aromatisierten Zuckersirupen erhalten, was zu sehr kalorienreichen Getränken führt. Teilweise werden Biermischgetränke auch unter Verwendung süßstoffhaltiger Sirupe hergestellt. Bei Verkostungen zeigt sich allerdings, dass die süßstoffhaltigen Sirupe enthaltenden Biermischgetränke zuckerhaltigen Biermischgetränken unterlegen sind. Die Verwendung von Zuckersirupen für die Herstellung von Biermischgetränken ist jedoch nachteilig, da die bei der Bierherstellung eingesetzten vergärbaren Zucker eine extrem scharfe Filtration beziehungsweise eine Pasteurisation oder sonstige Konservierung der Getränke erfordern. Die Pasteurisation ist jedoch mit erhöhten Anlageninvestitionen und erhöhtem Energie- oder Wasserverbrauch verbunden und verschlechtert das sensorische Geschmacksprofil.

Alkoholfreie Biere mit 7 % bis 8 % Stammwürze werden derzeit hauptsächlich entweder durch frühzeitiges Stoppen der Gärung bei 0,5 Vol. Alkoholgehalt oder aus Bier durch Alkoholentzug auf 0,5 % Vol. hergestellt. Bei der gestoppten Gärung wird die Gärung durch Abkühlen auf 0°C gestoppt und die Hefe entfernt. Derartige Biere sind jedoch wenig bekömmlich und zeigen keinen runden Biergeschmack.

Für das Alkoholentzugs-Verfahren werden hauptsächlich Vakuumverdampfungs- oder Membran-Anlagen eingesetzt. Die Getränke erhalten dabei jedoch meist einen typischen Brotgeschmack, der auch als Pasteurgeschmack bekannt ist. Je nach Entalkoholisierungsverfahren zeigen sich auch Fehlaromen, sodass die Biere einen leeren Geschmack und fehlenden Charakter aufweisen. Die Verfahren sind darüber hinaus auch aufgrund der erhöhten Kosten nachteilig, da zu den normalen Braukosten noch die Kosten für Destillation und Vakuumerzeugung kommen.

Ähnliche Nachteile weisen auch die in DE 22 25 270 B2 und AT 300 698 beschriebenen Verfahren auf. Bei dem in DE 22 25 270 B2 beschriebenen Verfahren wird Sauerstoff oder ein sauerstoffhaltiges Gas in eine aus Getreide- oder Malzmaischen bereitete Würze geleitet, wodurch die Fermentierung zumindest teilweise aerob als Verhefung geführt wird. Bei dem in AT 300 698 beschriebenen Verfahren AT 300 698 werden bei der Hauptgärung unterschiedliche Temperaturen eingesetzt, eine Diastase-Lösung wird zugegeben und die verbrauchte Hefe wird durch frische Hefe ersetzt, sodass in der ersten Phase der Hauptgärung etwa ein Drittel der Würze bei einer Temperatur von 4°C bis 8°C bis zu einem Vergärungsgrad von 40 % bis 85 % vergärt und danach der Alkoholgehalt durch Kochen auf etwa 1 Gew.-% herabgesetzt wird. In einer zweiten Phase erfolgt nach Zusatz einer an Grenzdextrinasen angereicherten Diastase-Lösung dann die vollständige Vergärung. Beide Verfahren führen ebenfalls zu Getränken mit einem untypischen Biergeschmack.

Auch bei den derzeit eingesetzten Verfahren, bei denen mittels Umkehrosmose dem Bier Alkohol entzogen wird, werden alkoholfreie oder alkoholarme Biere erhalten, die geschmacklich die Qualität klassischer Vollbiere nur schwerlich erreichen.

Aus der Patentschrift DE 23 44 252 C3 ist darüber hinaus ein Verfahren zur Herstellung eines alkoholarmen bierähnlichen Getränkes bekannt, bei dem die Würze im Gemisch mit 6-α-Glucosidofructofuranose (Palatinose) vergärt wird, wobei das Mischungsverhältnis von Stammwürzgehalt zu Palatinose im Bereich von 2:1 bis 1:2 liegt. Unter Verwendung dieses Verfahrens hergestellte Biere weisen allerdings ebenfalls eine nicht ausreichende aromatische Geschmacksfülle auf.

Zusammengefasst zeigt sich, dass die derzeit bekannte Herstellung alkoholreduzierter beziehungsweise alkoholfreier Biere sehr aufwendig und dementsprechend auch teuer ist. Nicht nur durch die Anschaffung von Anlagen zur Entalkoholisierung entstehen höhere Kosten, sondern auch durch den erforderlichen höheren Wasserverbrauch und damit einhergehende höhere Abwasser- und Energiekosten. Darüber hinaus erreicht der Geschmack der bekannten alkoholfreien Biere nur ansatzweise den eines herkömmlichen Bieres.

Der vorliegenden Erfindung liegt daher das technische Problem zugrunde, Verfahren zur Herstellung alkoholarmer oder alkoholfreier Biere beziehungsweise bierähnlicher Erfrischungsgetränke, die eine dem Vollbier adäquate aromatische Geschmacksfülle aufweisen und die auch für Diabetiker geeignet sind, bereitzustellen, wobei die Verfahren ohne zusätzliche Anlageinvestitionen, insbesondere ohne zusätzliche Entalkoholisierungsanlagen, in normalen Brauereibetrieben eingesetzt werden können.

Die vorliegende Erfindung löst das ihr zugrunde liegende technische Problem durch die Bereitstellung eines Verfahrens zur Herstellung eines alkoholarmen oder alkoholfreien Bieres oder eines bierähnlichen Erfrischungsgetränkes, wobei in einem ersten Schritt eine Würze durch Vermischen von Brauwasser, Hopfen und einer Kohlenhydratquelle hergestellt, in einem zweiten Schritt die Würze gekocht und in einem dritten Schritt die Würze einem Gärprozess unterzogen wird, dadurch gekennzeichnet, dass ein Palatinose-haltiges Gemisch oder Palatinose vor, während oder nach dem Gärprozess zugesetzt wird und wobei zum Vergären zumindest ein Mikroorganismus, ausgewählt aus Saccharomyces diastaticus und Brettanomyces intermedius und gegebenenfalls zusätzlich mindestens einem untergärigen Saccharomyces cerevisiae-Stamm und/oder obergärigen Saccharomyces cerevisiae-Stamm wie Saccharomyces carlsbergensis verwendet wird.

Das erfindungsgemäße Verfahren ist dadurch charakterisiert, dass der Alkoholgehalt des hergestellten alkoholarmen alkoholfreien Bieres beziehungsweise bierähnlichen Erfrischungsgetränkes durch mehrere unterschiedliche Verfahrensschritte herabgesetzt wird. Einerseits wird der Würze vor, während oder nach dem Gärprozess Palatinose oder ein Palatinose-haltiges Gemisch zugesetzt. Palatinose ist ein reduzierender Zucker, der nicht nur bessere organoleptische Eigenschaften als Saccharose aufweist, sondern auch von Mikroorganismen wie Saccharomyces cerevisiae oder Saccharomyces carlsbergensis nicht oder nur sehr schwer assimiliert und metabolisiert werden kann. Insbesondere in den Ausführungsformen des erfindungsgemäßen Verfahrens, bei denen die Zugabe von Palatinose vor oder während der Gärung erfolgt, wird somit ein Teil der Würze durch Palatinose ersetzt, so dass bei der Gärung der Alkoholgehalt des hergestellten Getränkes gegenüber dem eines normalen Bieres herabgesetzt wird.

Erfindungsgemäß werden zur Gärung nicht die üblicherweise zur Bierherstellung eingesetzten Mikroorganismen Saccharomyces cerevisiae (zum Beispiel MJJ 25) und Saccharomyces carlsbergensis (zum Beispiel MJJ 9 oder MJJ 11) eingesetzt, sondern Saccharomyces diastaticus und Brettanomyces intermedius. Während beim klassischen Brauverfahren zur Herstellung von Vollbier ausschließlich Kulturhefe, das heißt Saccharomyces cerevisiae oder gelegentlich auch als S. carlsbergensis bezeichnete untergärige Stämme davon Verwendung finden, werden in bevorzugten Ausführungsformen des erfindungsgemäßen Verfahrens Gemische unterschiedlicher Mikroorganismen verwendet. Erfindungsgemäß ist auch vorgesehen, dass in weiteren bevorzugten Ausführungsformen neben den vorstehend genannten Mikroorganismen, insbesondere Hefen, auch Mikroorganismen eingesetzt werden, die vergärbare Zucker nicht zu Alkohol, sondern beispielsweise zu Milchsäure, vergären beziehungsweise die in der Lage sind, den durch die Hefegärung erhaltenen Alkohol abzubauen. Auch dies führt erfindungsgemäß zur Herabsetzung des Alkoholgehaltes der unter Verwendung des erfindungsgemäßen Verfahrens hergestellten Getränke.

Erfindungsgemäß ist also bevorzugt vorgesehen, dass die eingesetzte Palatinose von den eingesetzten Mikroorganismen nicht oder nur sehr langsam beziehungsweise spät einsetzend vergoren wird, sodass wenig, beziehungsweise kein, Alkohol gebildet wird.

Für das erfindungsgemäße Verfahren sind insbesondere solche Mikroorganismen, insbesondere Hefen, geeignet, die in einem wie folgt charakterisierten Verfahren innerhalb von 11 Tagen maximal 10 bis 30% der ihnen zur Verfügung gestellten Palatinose verstoffwechseln. Gemäß dieser für die Ermittlung erfindungsgemäß besonders bevorzugter Hefen verwendeten Verfahrensweise werden die zu testenden Hefen in 100 ml einer Bierwürze, pH 5,1 für 24 Stunden bei 30°C kultiviert. Nach der Kultivierung werden die Zellen abzentrifugiert (10 min, 4000 x g) und das Zellpellet in 10 mL eines Palatinose-Mediums bestehend aus 67 g/L Yeast nitrogen base (Firma Difco) und 50 g/L Palatinose, pH 5,1 resuspendiert. Die Zellen werden 2-fach mit gleichem Medium gewaschen und anschließend in 5 mL Medium resuspendiert. Von dieser Zellsuspension wurden 100 µL in 1 L Palatinose-Medium beimpft und 11 Tage bei 30°C kultiviert. Nach der 11-tägigen Bebrütung wird der Rest-Palatinosegehalt mittels HPAEC bestimmt.

Eine weitere Senkung des Alkoholgehaltes der hergestellten Getränke wird darüber hinaus dadurch erreicht, dass in einer bevorzugten Ausführungsform des erfindungsgemäßen Verfahrens die Würze teilweise Rohfrucht, also nicht vermälztes Getreide, enthält. Da die zur Bierherstellung verwendeten Ausgangsmaterialien vor der Vergärung erst verzuckert werden müssen, wobei die dafür erforderlichen Enzyme während des Mälzens gebildet, führt die Verwendung von Rohfrucht zu einem geringeren Zuckergehalt und dementsprechend zu einem geringeren Alkoholgehalt nach dem Gären.

Unter Verwendung des erfindungsgemäßen Verfahrens lassen sich somit auf relativ einfache Art und Weise alkoholarme oder alkoholfreie Biere herstellen, bei denen es sich in Abhängigkeit von dem/den zur Gärung eingesetzten Mikroorganismus/Mikroorganismen um untergärige oder obergärige alkoholfreie oder alkoholarme Biere handeln kann. Da die zur Vergärung eingesetzte Würze unterschiedliche Kohlenhydratquellen enthalten kann, lassen sich unter Verwendung des erfindungsgemäßen Verfahrens auch helle oder dunkle alkoholfreie oder alkoholarme Biere herstellen. Der Alkoholgehalt der erfindungsgemäß hergestellten Biere kann gegebenenfalls unter Verwendung von Alkoholentzugsverfahren weiter abgesenkt werden.

Im Zusammenhang mit der vorliegenden Erfindung wird unter einer "Würze" der von unlöslichen Bestandteilen befreite Extrakt aus einer Kohlenhydratquelle, beispielsweise Malz, verstanden, der mit Wasser und Hopfen versetzt und gekocht wird. Nach dem Kochen mit Hopfen wird die sogenannte Ausschlag-Würze erhalten. Nach Abkühlen liegt die gekochte Würze als Anstellwürze vor. Die Würze wird mittels Maischen, Abläutern, Würze-Kochen und Würze-Behandlung hergestellt. Die Herstellung der Würze dient dem Ziel, die zunächst ungelösten Bestandteile der Kohlenhydratquelle, insbesondere von Malz, in lösliche vergärbare Stoffe umzuwandeln, die verbleibenden festen Bestandteile abzutrennen und schließlich das Gewürz, d.h. den Hopfen, zuzugeben. Beim Maischen wird zunächst die geschrotete Kohlenhydratquelle, insbesondere Malz, mit dem Brauwasser vermischt. Anschließend erfolgt in dem sogenannten Maischverfahren in einem spezifischen Temperatur-Zeit-Programm eine gezielte enzymatische Umwandlung von Inhaltsstoffen der Kohlenhydratquelle, wobei der wichtigste Prozess der vollständige Abbau von Stärke zu vergärbaren Zuckern wie Glucose, Maltose oder Maltotriose und nicht-vergärbaren Dextrinen ist. Das TemperaturOptimum der Maltose-Bildung liegt bei 60°C-65°C, das der Dextrinbildung bei 70°C-75°C. Die Temperatur bestimmt den Endvergärungsgrad der Würze je nach Biertyp. Nach dem Läutern und Absüßen der Treber mit heißem Brauwasser (78°C) wird die Würze 60 min bis 100 min unter Zugabe von Hopfen gekocht, wobei je nach herzustellendem Biertyp etwa 150 bis 500 g/hl Hopfen zugegeben werden. Durch Verdampfen von etwa 6-10 % der Ausgangsmenge wird der Stammwürze-Gehalt eingestellt. Beim Kochen erfolgt zudem eine Keimfreimachung, es kommt zur Koagulation von Eiweißstoffen, Hopfenbitterstoffe werden isomerisiert und Aromastoffe werden gebildet und teilweise auch verdampft. Die gekochte und gehopfte Würze wird anschließend im Whirlpool und/oder Filtration von Trubstoffen befreit. Nach dem Kühlen der Würze, die üblicherweise im Plattenwärmetauschern erfolgt, wird der Kühltrub partiell entfernt und es erfolgt eine intensive Belüftung zur Versorgung der zur Gärung eingesetzten Mikroorganismen mit Sauerstoff. Unmittelbar darauf wird die Würze mit einem geeigneten gärkräftigen Mikroorganismus, beispielsweise einer Hefe versetzt.

Unter einer "Kohlenhydratquelle" werden Kohlenhydrate enthaltende Materialien verstanden, bei denen die Kohlenhydrate zumindest teilweise bei der Herstellung der Würze in vergärbare lösliche Zucker wie Glucose, Maltose oder Maltotriose überführt werden können, die dann bei der Gärung von Mikroorganismen, insbesondere Hefen, als Kohlenstoffquelle genutzt werden. In bevorzugter Ausführungsform der Erfindung handelt es sich bei der eingesetzten Kohlenhydratquelle um vermälztes Getreide, Rohfrucht oder ein Gemisch davon.

Bei vermälztem Getreide handelt es sich vorzugsweise um Körner und Samen von Gerste, Weizen, Roggen, Hafer, Hirse, Triticale, Reis, Sorghum und/oder Mais, die einem Malzherstellungsverfahren unterzogen wurden. Der Begriff "vermälztes Getreide" umfasst daher auch Malz. Bei Rohfrucht handelt es sich vorzugsweise um Körner und Samen von Gerste, Weizen, Roggen, Hafer, Hirse, Sorghum Triticale, Reis und/oder Mais, die zwar verschrotet wurden, jedoch nicht vermälzt wurden.

Bei der Herstellung des Malzes, das heißt beim Mälzen, wird die ursprüngliche feste Kornstruktur zerstört und es werden Enzyme gebildet, welche die bei der Bierherstellung erforderlichen biochemischen Prozesse ermöglichen. Bei der klassischen Bierherstellung müssen die Ausgangsmaterialien vor der Vergärung verzuckert werden. Dazu werden die malzeigenen hydrolytisch wirkenden Enzyme wie Amylasen, Maltasen etc., die die Stärke in nicht-vergärbare Dextrine und vergärbare Glucose, Maltose und Maltotriose überführen, genutzt. Bei der Malzbereitung lässt man die geweichten Cerealien bei 12°C bis 18°C keimen und unterbricht den Keimprozess, sobald die Enzymbildung und Lösungsvorgänge das gewünschte Maß erreicht haben. Beim Keimen werden insbesondere Glucanasen, die die Zellwand zu niedermolekularen Kohlenhydraten abbauen, proteolytische Enzyme, die Eiweiße abbauen, Amylasen, die Stärke abbauen, und Phosphatasen, die Phosphorsäureester spalten, gebildet. Diese Prozesse werden durch Wasser- und Sauerstoffaufnahme gestartet. Infolge der Enzymtätigkeit werden die Zellwände im Korn abgebaut, so dass dieses zunehmend mürbe wird. Der Keimprozess wird durch die Parameter Weichgrad, das heißt Wassergehalt im Keimgut, und Keimtemperatur, wobei die Temperatursteuerung über die Lufttemperatur erfolgt, gesteuert. Keimzeit und Luftverhältnisse sind hingegen ohne Bedeutung. Die biochemischen Umwandlungen im Jungmalz oder Grünmalz werden unterbrochen, sobald sie ein bestimmtes Maß erreicht haben. Dies erfolgt durch Anwendung erhöhter Temperaturen bei großem Luftdurchsatz, wobei Atmung und die Lösung des Malzes durch Wasserentzug unterbrochen werden. Durch Vortrocknen bei 40 bis 50°C (Schwelken) wird der Wassergehalt von über 50% auf 10 bis 12% gesenkt. Danach wird die Temperatur auf etwa 80 bis 85°C angehoben und das Malz auf einen Wassergehalt von etwa 4 bis 5% gebracht. Dieser Vorgang wird als Darren bezeichnet. Durch die Temperatur-Zeitsteuerung werden beim Keimen und Darren die einzelnen Malztypen festgelegt, nämlich helles Malz, mittelfarbiges Malz, dunkles Malz, helle und dunkle Caramelmalze, Farbmalz und Spitzmalz.

Unter einer "Gärung" oder einem "Gärprozess" wird der durch Mikroorganismen bewirkte enzymatische Abbau von Kohlenhydraten unter vollständigem oder teilweisen Ausschluss von Sauerstoff verstanden. Bei der alkoholischen Gärung werden Hexosen wie Glucose zu Ethanol und Kohlendioxid abgebaut. Der Gärprozess bei der Bierherstellung erfolgt üblicherweise in zwei Stufen. Die Hauptgärung wird durch Zusatz von Mikroorganismen , insbesondere Hefen, beispielsweise untergärige Hefen oder obergärige Hefen, eingeleitet. Am Ende der Hauptgärung scheidet sich die Hefe dann am Boden oder im Konus des Gärgefäßes ab. Das bei der Hauptgärung erhaltene Jungbier wird zurückgekühlt und einer Nachgärung unterzogen, wobei der Restextrakt vergärt und das Bier geklärt wird. Beim Gären verschwindet auch der Würzegeschmack, wobei sich insbesondere bei der Nachgärung der reine Biergeschmack ausbildet. Dieser Prozess wird auch als Reifung bezeichnet. Die Gärung kann beispielsweise durch unterschiedlicher Gärtemperatur, obergärige und untergärige Produktionsweise, offene Gärung oder geschlossene Gärung etc. beeinflusst werden.

In einer Ausführungsform der vorliegenden Erfindung wird das erfindungsgemäße Verfahren zur Herstellung eines dunklen alkoholarmen oder alkoholfreien Bieres oder eines hellen alkoholarmen oder alkoholfreien Bieres eingesetzt. Im Zusammenhang mit der vorliegenden Erfindung wird unter einem "alkoholfreien Bier" ein Bier mit einem Alkoholgehalt von etwa 0,5 % verstanden, das vorzugsweise etwa 7 -8 % Stammwürze aufweist. %-Angaben sind in dieser Lehre, wenn nicht anders angegeben, Volumen-%. Unter einem "alkoholarmen Bier" wird erfindungsgemäß ein Bier verstanden, das einen Alkoholgehalt von weniger als 6 %, insbesondere weniger als 5 %, vorzugsweise weniger als 4 %, besonders bevorzugt weniger als 3 % und am stärksten bevorzugt von weniger als 1 % bis 2 % aufweist.

In einer weiteren Ausführungsform wird unter Verwendung des erfindungsgemäßen Verfahrens obergäriges oder untergäriges Bier hergestellt. Untergäriges Bier wird bei einer Untergärung erhalten, wobei sich die Hefe nach der Gärung am Boden des Gefäßes absetzt und dort getrennt werden kann. Bei obergärigem Bier handelt es sich um ein Bier, das durch Obergärung erhalten wird, wobei die Hefe am Ende der Gärung nach oben steigt und oben, soweit es möglich ist, abgetrennt wird.

In einer weiteren Ausführungsform ist vorgesehen, dass die Würze vor, während oder nach der Gärung mit einem Palatinose-haltigen Gemisch oder Palatinose in einem Verhältnis Kohlenhydratquelle, insbesondere Malz zu Palatinose von 2:1 bis 1:1 vermischt wird. Erfindungsgemäß ist insbesondere vorgesehen, dass das Palatinosehaltige Gemisch oder die Palatinose als Sirup, in Lösung oder in Form eines kristallinen Feststoffes zugesetzt wird.

Palatinose (6-O-α-D-Gluccopyranosylfructose; Isomaltulose) ist eine Disaccharid-Ketose, die natürlicherweise vorkommt, beispielsweise in Honig. Palatinose kann gemäß DE 44 14 185 C1 durch einfache enzymatische Umlagerung, beispielsweise unter Verwendung immobilisierter Bakterienzellen insbesondere der Spezies Protaminobacter rubrum, Erwinia rhapontici und Serratia plymuthica oder einer daraus isolierten Saccharose-Isomerase großtechnisch aus Saccharose hergestellt werden. Bei Palatinose handelt es sich um einen reduzierten Zucker, der beispielsweise durch Saccharomyces cerevisiae, S. carlsbergensis, S. diastaticus oder Brettanomyces intermedius nicht oder nur in geringem Maße vergärt werden kann. Die Löslichkeit von Palatinose in Wasser beträgt 0,49 g Palatinose pro g Wasser. Die Süßkraft von Palatinose beträgt etwa 1/3 der von Saccharose.

Bei einem Palatinose-haltigen Gemisch handelt es sich um eine Kombination von Palatinose mit mindestens einem weiteren Kohlenhydrat, beispielsweise Fructose, Glucose, Saccharose, Trehalulose, Isomaltose, Isomelizitose, Oligosacchariden mit einem Polymerisationsgrad von 3 oder 4 oder noch mehr oder Gemischen davon. In bevorzugter Ausführungsform ist das Palatinose-haltige Gemisch das Saccharose-Isomerisierungsprodukt, das mittels Transglucosidierung der Saccharose, vorzugsweise unter Verwendung toter oder lebender Zellen von Protaminobacter rubrum oder daraus hergestellter Enzymextrakte, gewonnen wird. Erfindungsgemäß bevorzugte Palatinose-haltige Gemische können daher in einer Ausgestaltung der Erfindung etwa 79-85 % Palatinose, 8-10 % Trehalulose, 0,5-2 % Saccharose, 1-1,5 % Isomaltose, Oligosaccharide mit einem Polymerisationsgrad von 3 oder mehr, 2,5-3,5 % Fructose und 2,0-2,5 % Glucose umfassen, wobei sich diese Angaben auf den prozentualen Feststoffgehalt beziehen.

Da die Mikroorganismen Saccharomyces diastaticus und Brettanomyces intermedius Palatinose nicht oder nur sehr schwer assimilieren und metabolisieren, wird durch die Zugabe von Palatinose oder dem Palatinose-haltigen Gemisch vor oder während der Gärung erreicht, dass bei der Gärung der Alkoholgehalt des hergestellten Getränkes gegenüber dem eines normalen Bieres herabgesetzt wird, so dass ein alkoholfreies oder alkoholarmes Bier erhalten wird. Durch die Zugabe von Palatinose oder dem Palatinose-haltigen Gemisch nach der Gärung wird insbesondere ein Süßungseffekt erreicht, so dass das bei der Gärung hergestellte alkoholfreie oder alkoholarme Bier in ein alkoholfreies oder alkoholarmes bierähnliches Erfrischungsgetränk, insbesondere ein Biermischgetränk überführt wird.

In einer besonders bevorzugten Ausführungsform der Erfindung ist vorgesehen, dass der Gärprozess als Mischgärung unter Einsatz unterschiedlicher Mikroorganismen durchgeführt wird. Besonders bevorzugt erfolgt die Mischgärung unter Verwendung von mindestens zwei verschiedenen Mikroorganismen, insbesondere von zwei verschiedenen Hefen, beispielsweise eines obergärigen oder untergärigen S. cerevisiae-Stammes und des S. diastaticus-Stammes oder eines S. cerevisiae-Stammens und des Brettanomyces intermedius-Stammes. Selbstverständlich können auch drei, vier oder noch mehr verschiedene Mikroorganismen zur Mischgärung eingesetzt werden.

In einer weiteren besonders bevorzugten Ausführungsform der Erfindung ist vorgesehen, dass der Gärprozess unter Verwendung mindestens einer Hefe und mindestens eines Säurebildners ausgewählt aus der Gruppe bestehend aus Vertretern von Lactobacillus sp., Acetobacter sp. und Gluconobacter sp. durchgeführt wird.

In einer bevorzugten Ausgestaltung dieser Ausführungsform ist beispielsweise vorgesehen, dass die Gärung unter Verwendung von S. cerevisiae und/oder S. diastaticus und/oder Brettanomyces intermedius und einem Lactobacillus-Vertreter durchgeführt wird. Lactobacillen, die auch als Milchsäurebakterien bekannt sind, sind zur Milchsäuregärung befähigt. Durch die Verwendung von Lactobacillus wird erreicht, dass für die Hefen weniger vergärbare Zucker zur Verfügung stehen, so dass bei der alkoholischen Gärung der Hefen weniger Alkohol gebildet werden kann. Auf diese Weise wird der Alkoholgehalt der hergestellten Getränke nochmals reduziert. Die aufgrund einer solchen Gärung hergestellten alkoholarmen oder alkoholfreien Biere beziehungsweise bierähnlichen Getränke zeichnen sich durch einen milden säuerlichen Geschmack aus, der etwa dem von Berliner Weiße entspricht.

In einer weiteren bevorzugten Ausgestaltung dieser Ausführungsform ist beispielsweise vorgesehen, dass die Gärung unter Verwendung von S. diastaticus und/oder Brettanomyces intermedius und einem Acetobacter-Vertreter durchgeführt wird. Die Gattung Acetobacter umfasst im engeren Sinn die Essigsäurebakterien, die durch Oxidation von Ethanol Essigsäure bilden können. Die Verwendung von Acetobacter bei der alkoholischen Hefe-Gärung bewirkt einen Abbau des gebildeten Akohols. Bei der unter Verwendung von Hefen und Acetobacter wird also einerseits eine Reduzierung des bei der Hefegärung erhaltenen Alkohols bewirkt und andererseits wird den hergestellten alkoholarmen oder alkoholfreien Bieren beziehungsweise bierähnlichen Getränken ein säuerlicher Geschmack verliehen, der sich deutlich von dem Geschmack der unter Verwendung von Lactobacillus erhaltenen Getränke unterscheidet.

In einer weiteren bevorzugten Ausgestaltung dieser Ausführungsform ist beispielsweise vorgesehen, dass die Gärung unter Verwendung von S. diastaticus und/oder Brettanomyces intermedius und einem Gluconobacter-Vertreter durchgeführt wird. Gluconobacter kann einerseits Ethanol zu Essigsäure und andererseits Glucose zu Gluconsäure oxidieren. Bei einer Mischgärung mittels mindestens einer Hefe und mindestens einem Gluconobacter-Vertreter kann Gluconobacter also einerseits das für die Hefegärung benötigte Ausgangssubstrat Glucose vermindern, so dass von vornherein weniger Alkohol gebildet wird, und andererseits den bei der Hefe-Gärung gebildeten Ethanol wieder abbauen, so dass der Alkoholgehalt der hergestellten bierähnlichen Getränke deutlich reduziert wird. Die durch diese Mischgärung hergestellten alkoholarmen oder alkoholfreien Bieren beziehungsweise bierähnlichen Getränke weisen ebenfalls einen angenehmen säuerlichen Geschmack auf.

Erfindungsgemäß ist auch vorgesehen, dass der Gärprozess des erfindungsgemäßen Verfahrens mittels eines einzigen Mikroorganismus, insbesondere einer Hefe, durchgeführt wird.

Die vorliegende Erfindung betrifft auch ein mittels des erfindungsgemäßen Verfahrens hergestelltes alkoholarmes oder alkoholfreies Bier oder bierähnliches Erfrischungsgetränk. In einer bevorzugten Ausführungsform handelt es sich um ein helles alkoholarmes oder alkoholfreies Bier beziehungsweise bierähnliches Getränk oder ein dunkles alkoholarmes oder alkoholfreies Bier beziehungsweise bierähnliches Getränk. Das alkoholarme oder alkoholfreie Bier oder bierähnliche Getränk kann als obergäriges oder untergäriges Bier vorliegen.

Die vorliegende Erfindung betrifft auch ein Biermischgetränk enthaltend eine Kräuter-, Aroma-, Coffein-, Farbstoff-, Aminosäure-, Genusssäure-, Säure- und/oder Fruchtkomponente sowie
(a) ein alkoholarmes oder alkoholfreies Bier oder bierähnliches Erfrischungsgetränk, hergestellt mittels eines erfindungsgemäßen Verfahrens, und eine Zuckerkomponente, insbesondere eine saccharosehaltige Zuckerkomponente,
(b) Bier, alkoholfreies, alkoholarmes oder alkoholangereichertes Bier oder bierähnliches Erfrischungsgetränk und Palatinose oder eine palatinosehaltige Zutat oder
(c) ein erfindungsgemäßes alkoholarmes oder alkoholfreies Bier oder bierähnliches Erfrischungsgetränk und Palatinose oder eine palatinosehaltige Zutat.

Bei der Palatinose-haltigen Zutat handelt es sich erfindungsgemäß um ein Palatinose-haltiges Gemisch, also eine Kombination von Palatinose mit mindestens einem weiteren Kohlenhydrat, beispielsweise Fructose, Glucose, Saccharose, Trehalulose, Isomaltose, Isomelizitose, Oligosacchariden mit einem Polymerisationsgrad von 3 oder 4 oder noch mehr oder Gemischen davon, wobei die Palatinosehaltige Zutat vorzugsweise das Saccharose-Isomerisierungsprodukt ist, das mittels Transglucosidierung der Saccharose, vorzugsweise unter Verwendung toter oder lebender Zellen von Protaminobacter rubrum oder daraus hergestellter Enzymextrakte, gewonnen wird. Erfindungsgemäß bevorzugte Palatinose-haltige Gemische können daher in einer Ausgestaltung der Erfindung etwa 79-85 % Palatinose, 8-10 % Trehalulose, 0,5-2 % Saccharose, 1-1,5 % Isomaltose, Oligosaccharide mit einem Polymerisationsgrad von 3 oder mehr, 2,5-3,5 % Fructose und 2,0-2,5 % Glucose umfassen, wobei sich diese Angaben auf den prozentualen Feststoffgehalt beziehen.

Unter "Kräuterkomponenten" werden insbesondere Extrakte, Lösungen, Auszüge oder Essenzen aus Pflanzenteilen von beispielsweise Anis, Baldrianwurzel, Brennessel, Brombeerblättern, Erdbeerblättern, Fenchel, Frauenmantel, Gänsefingerkraut, Ginseng, Hagebutte, Hibiskusblüten, Himbeerblättern, Holunder, Hopfen, Ingwer, Johanniskraut, Kamille, Koriander, Krauseminze, Lapacho-Pflanze, Lavendel, Limonen-Gras, Majoran, Malve, Melisse, Mistel, Pfefferminze, Ringelblume, Rosmarin, Enzian, Schafgarbe, Thymian, Ysop, Zimt etc. verstanden.

Unter "Fruchtkomponenten" werden erfindungsgemäß insbesondere Extrakte aus Früchten wie Äpfeln, Bananen, Birnen, Ananas, Orangen, Grapefruit, Kirsche, Sauerkirsche, Limonen, Zitronen, Passionsfrüchten, Pfirsichen, Sanddorn, Himbeeren, Erdbeeren, Brombeeren, Johannisbeeren, Stachelbeerene, Kiwi-Früchten, etc. verstanden.

Erfindungsgemäß ist ebenfalls vorgesehen, dass das Biermischgetränk natürliche oder naturidentische Geruch- und/oder Geschmacksstoffe als Aromakomponente enthalten können. Insbesondere kann es sich dabei um aus natürlichen Ausgangsmaterialien hergestellte Produkte, synthetisch hergestellte Produkte oder Gemische davon handeln, beispielsweise ätherische Öle aus Pflanzen oder Früchten wie Citrusöl, Pfefferminzöl oder Nelkenöl, Fruchtessenzen, aromagebende Fruchtsäfte, Anis, Menthol, Eukalyptus etc.

Bei den Farbstoffkomponenten handelt es sich um solche Verbindungen und Stoffe, die zur Farbkorrektur und/oder zur Erzeugung eines ansprechenden Aussehens des erfindungsgemäßen Biermischgetränkes eingesetzt werden, wobei natürliche oder synthetisch hergestellte Farbstoffe verwendet werden können. Die erfindungsgemäß eingesetzten Farbstoffkomponenten können beispielsweise Farbstoffe pflanzlicher Herkunft wie Carotinoide, Flavonoide oder Anthocyane, Farbstoffe tierischer Herkunft, anorganische Pigmente wie Eisenoxid-Pigmente, Produkte der enzymatischen und der nicht-enzymatischen Bräunung, Erhitzungsprodukte wie Zuckercoleur, oder synthetische Farbstoffe wie Azo-, Triphenylmethan-, Indigoid-, Xanthen- oder Chinolin-Verbindungen sein. Geeignete synthetische Farbstoffe sind beispielsweise Erythrosin, Indigo Camine oder Tartrazin.

Bei den Aminosäure-Komponenten handelt es sicherfindungsgemäß insbesondere um Gemische essentieller Aminosäuren, die vom menschlichen Organismus nicht selbst synthetisiert oder nur mit unzureichender Geschwindigkeit bereitgestellt werden können und daher mit der Nahrung zugeführt werden müssen. Essentielle Aminosäuren sind insbesondere His, Ile, Leu, Lys, Thr, Trp und Val.

Bei den erfindungsgemäß verwendeten Säure-Komponenten handelt es sich insbesondere um solche Säuren, die dem erfindungsgemäßen Getränk entweder eine säuerliche Geschmackskomponente hinzufügen und/oder zur Verbesserung der Lagerungsbeständigkeit beitragen.

Besonders bevorzugte Genusssäuren sind insbesondere Citronensäure, Äpfelsäure, Milchsäure, Weinsäure und dergleichen. Genusssäurekomponenten können dem erfindungsgemäßen Biermischgetränk neben der säuerlichen Geschmackskomponente darüber hinaus eine weitere typische Geschmackskomponente hinzufügen. Beispielsweise kann Citronensäure dem erfindungsgemäßen Biermischgetränk einen zitrusartigen Geschmack verleihen. Äpfelsäure kann dem erfindungsgemäßen Getränk eine apfelartige Geschmackskomponente verleihen.

Die erfindungsgemäßen Getränke können in einer bevorzugten Ausführungsform auch als Sprudelgetränke vorliegen, das heißt sie können Kohlensäure oder Kohlendioxid enthalten.

Die erfindungsgemäßen Biermischgetränke können in einer besonders bevorzugten Ausführungsform auch Coffein-Komponenten enthalten. Als Coffein-Komponenten werden erfindungsgemäß insbesondere Extrakte, Aufbereitungen oder Auszüge aus Kaffeebohnen, der Teepflanze oder Teilen davon, der Mate-Pflanze oder Teilen davon, der Kolanuss, der Kakaobohne oder Guarana-Paste eingesetzt. Die Zugabe der Coffein-Komponenten zu den erfindungsgemäßen Biermischgetränken bewirkt, dass diese anregend auf die Großhirnrinde und das Atem- und Kreislaufzentrum wirken.

Die vorliegende Erfindung betrifft auch ein funktionales bierähnliches Getränk, enthaltend Mikroorganismen und Palatinose. Erfindungsgemäß wird also ein funktionales bierähnliches Getränk bereitgestellt, dass hergestellt wird, indem einem, vorzugsweise unter Verwendung des erfindungsgemäßen Verfahrens hergestellten bierähnlichen alkoholfreien oder alkoholarmen Getränk Palatinose und mindestens eine Kultur eines probiotischen Mikroorganismus, beispielsweise Lactobakterien, Bifidobakterien, sogenannte "Synbiotika" etc. zugesetzt werden. Je nach Verwendung sind die zugesetzten probiotischen Mikroorganismus-Kulturen als Lebendkulturen oder als Trockenkulturen oder Dauerkulturen ausgeführt.

Die vorliegende Erfindung betrifft auch die Verwendung von Palatinose oder palatinosehaltigen Zutaten optional zusammen mit Zuckersirupen für die Herstellung von Biermischgetränken oder von Zuckersirupen für die Herstellung von Biermischgetränken.

Die Erfindung wird durch die folgenden Beispiele näher erläutert.

### Beispiel 1

Mälztrunkherstellung mit Palatinose
a) Einbrauen eines Schankbieres, das ohne Gärung und ohne Zugabe von Organismenkulturen gekühlt, filtriert und abgefüllt wird. Die Zugabe eines palatinosehaltigen Sirups oder einer palatinosehaltigen Lösung erfolgt beim Kochen, vor der Filtration oder unmittelbar vor der Abfüllung.
b) Herstellen eines Mälztrunkes oder Malzbieres mit Palatinose nach dem Hefe-Kälte-Kontakt Verfahren oder einem Verfahren in Anlehnung an dieses Verfahren.

Die Ausschlagwürze eines beliebigen Stammwürzegehaltes wird auf 0°C gekühlt und nach Einstellung des pH-Wertes durch biologische Säuerung werden etwa 30 x 10⁶ Hefezellen zugesetzt. Eine Belüftung des Hefe-Würze-Gemisches findet nicht statt. Durch Zuführen von CO₂ wird der Sauerstoffgehalt weiter abgesenkt. Die Kontaktzeit der Hefe mit der Würze beträgt 24 - 48 h bei Temperaturen um 0°C. Es entsteht so ein Getränk mit einem Alkoholgehalt von < 0,5 % - 1,5 % Vol, dem zur Geschmacksverbesserung Palatinose beigemischt wird. Palatinose wird in kristalliner oder in gelöster Form. Zugegeben.

### Beispiel 2

### Herstellen eines schlanken alkoholfreien Getränks mit Palatinose

Ein klassisch hergestelltes Bier wird nach dem Stand der Technik entalkoholisiert, zum Beispiel durch Dialyse, Umkehrosmose, Vakuumverdampfung, etc.. Zur Verbesserung des organoleptischen Eindrucks wird diesem Getränk vor oder nach der Entalkoholisierung Palatinose oder eine Palatinoselösung in einer geringen Konzentration von 1 g - 5 g Palatinose pro 100 ml fertiges Getränk zugesetzt. Das Getränk erhält so mehr Körper und Volumen.

### Beispiel 3

### Herstellen eines alkoholreduzierten Bieres mit Palatinose

Ein nach dem Stand der Technik hergestelltes Bier wird unter Verwendung eines in Beispiel 2 beschriebenen Verfahrens entalkoholisiert. Die Entalkoholisierung erfolgt jedoch nicht vollständig, sondern nur bis zu einem Restalkoholgehalt von etwa 1 % Vol - 3 % Vol. Auch diesem Bier wird eine geringe Menge Palatinose in kristalliner oder vorgelöster Form bis zu einer Endkonzentration von etwa 1 g bis 5 g pro 100 ml zugegeben.

### Beispiel 4

### Herstellung eines alkoholarmen Getränkes mit Palatinose

Bei einem aus beliebigen Malzvarietäten mit 100 % Malzschüttung oder mit bis zu 40 % Rohfruchteinsatz (unvermälztes Getreide, zum Beispiel Mais Reis, Gerste Weizen, Hafer, Hirse, Sorghum) gebrauten Bier wird der zu erwartende Extraktanteil aus den herkömmlichen Rohstoffen teilweise durch Palatinose substituiert.

Die Substitution erfolgt, indem zu einem Bier mit niedrigem Stammwürzegehalt (ca. 5 - 10 %) kristalline Palatinose in die Würzepfanne oder in den Whirlpool gegeben wird. Es soll das Verhältnis Palatinose zu Extrakt aus der Schüttung zwischen 1:4 und 2:1 liegen. Die Biere werden nach dem Stand der Technik vergoren, gelagert und gelangen filtriert oder unfiltriert zur Abfüllung. Sie enthalten jedoch nur 1/3 bis 2/3 des Alkohlgehaltes, wie er bei Bieren erwartet wird, die nach dem Stand der Technik gebraut wurden.

Die Substitution kann auch erfolgen indem zu einem beliebigen Zeitpunkt 100 hl Bier mit 100 hl einer palatinosehaltige Lösung verschnitten werden. Der Palatinosegehalt der Lösung beträgt etwa die 0,5 bis 2 fache Menge Extrakt der zur Bierherstellung verwendeten Bierwürze. Das Verschneiden kann zu jedem beliebigen Prozessschritt zwischen Sudhaus und Abfüllung erfolgen.

### Beispiel 5

### Herstellung von Biermischgetränken mit Palatinose

a) Es werden beliebige Biere hergestellt, denen zu einem beliebigen Zeitpunkt im Brauprozess Palatinose zugeführt wird. Diese Biere werden vor der Abfüllung mit Aromakonzentraten vermischt. Ein Mischen mit aromastoffhaltigen Zuckersirupen ist nicht erforderlich, da die Biere durch den Palatinoseanteil eine ausreichende Restsüße besitzen.
b) Nach dem Stand der Technik gebraute Biere werden mit oder ohne Filtration mit einem aromatisierten Fruchtsirup vermischt. Abweichend vom derzeitigen Stand der Technik wird der Zucker oder der Süßstoff in diesen Sirupen ganz oder teilweise durch Palatinose ersetzt.

## Patentansprüche

1. Verfahren zur Herstellung eines alkoholarmen oder alkoholfreien Bieres oder eines bierähnlichen Erfrischungsgetränkes, wobei in einem ersten Schritt eine Würze durch Vermischen von Brauwasser, Hopfen und einer Kohlenhydratquelle hergestellt, in einem zweiten Schritt die Würze gekocht und in einem dritten Schritt die Würze einem Gärprozess unterzogen wird, wobei ein Palatinose-haltiges Gemisch oder Palatinose vor, während oder nach dem Gärprozess zugesetzt wird, **dadurch gekennzeichnet, dass** zum Vergären mindestens ein Mikroorganismus, ausgewählt aus der Gruppe bestehend aus Saccharomyces diastaticus und Brettanomyces intermedius, verwendet wird.

2. Verfahren nach Anspruch 1, wobei die Kohlenhydratquelle in Form von vermälztem Getreide oder Rohfrucht plus vermälztem Getreide eingesetzt wird.

3. Verfahren nach einem der vorhergehenden Ansprüche, wobei ein dunkles oder ein helles Bier hergestellt wird.

4. Verfahren nach einem der vorhergehenden Ansprüche, wobei ein obergäriges oder untergäriges Bier hergestellt wird.

5. Verfahren nach einem der vorhergehenden Ansprüche, wobei die Würze mit dem Palatinose-haltigen Gemisch oder Palatinose in einem Verhältnis Kohlenhydratquelle, insbesondere Malz, zu Palatinose von 2:1 bis 1:1 vermischt wird.

6. Verfahren nach einem der vorhergehenden Ansprüche, wobei das Palatinose-haltige Gemisch oder die Palatinose als Sirup, in Lösung oder in Form eines kristallinen Feststoffes zugesetzt wird.

7. Verfahren nach einem der vorhergehenden Ansprüche, wobei der Gärprozess als Mischgärung unter Einsatz verschiedener Mikroorganismen durchgeführt wird.

8. Verfahren nach Anspruch 7, wobei mindestens zwei Mikroorganismen eingesetzt werden.

9. Verfahren nach Anspruch 7 oder 8, wobei die Vergärung unter Einsatz mindestens einer Hefe und mindestens eines Säurebildners durchgeführt wird.

10. Verfahren nach Anspruch 9, wobei der Säurebildner ausgewählt ist aus der Gruppe bestehend aus Lactobacillus sp., Acetobacter sp. und Gluconobacter sp..

11. Verfahren nach einem der Ansprüche 1 bis 6, wobei der Gärprozess mittels eines einzigen Organismus durchgeführt wird.

12. Alkoholarmes oder alkoholfreies Bier oder bierähnliches Getränk, herstellbar nach dem Verfahren nach einem der Ansprüche 1 bis 11.

13. Alkoholarmes Bier oder bierähnliches Erfrischungsgetränk nach Anspruch 12, wobei dieses ein helles oder dunkles Bier oder bierähnliches Getränk ist.

14. Biermischgetränk enthaltend eine Kräuter-, Aroma-, Coffein-, Farbstoff-, Aminosäure-, Genusssäure-, Säure- und/oder Fruchtkomponente sowie
(a) ein alkoholarmes oder alkoholfreies Bier oder bierähnliches Erfrischungsgetränk, herstellbar nach dem Verfahren nach einem der Ansprüche 1 bis 11, und eine Zuckerkomponente, insbesondere eine saccharosehaltige Zuckerkomponente, oder
(b) alkoholarmes oder alkoholfreies Bier oder bierähnliches Erfrischungsgetränk nach einem der Ansprüche 1 bis 11 und Palatinose oder eine palatinosehaltige Zutat.

15. Funktionales bierähnliches Getränk, herstellbar nach dem Verfahren nach einem der Ansprüche 1 bis 11, enthaltend Mikroorganismen und Palatinose.

## Claims

1. Method for producing a low-alcohol or alcohol-free beer or a beer-like soft drink, whereby a wort is produced by mixing mashing liquor, hop, and a carbohydrate source in a first step, the wort is boiled in a second step, and the wort is subjected to a fermentation process in a third step, whereby a palatinose-containing mixture or palatinose is added before, during or after the fermentation process, **characterized in that** at least one microorganism selected from the group consisting of Saccharomyces diastaticus and Brettanomyces intermedius, is used for fermenting.

2. Method according to claim 1, whereby the carbohydrate source is used in the form of malted grain or raw grain plus malted grain.

3. Method according to any one of the preceding claims, whereby a dark or a light beer is produced.

4. Method according to any one of the preceding claims, whereby a top fermentation or a bottom fermentation beer is produced.

5. Method according to any one of the preceding claims, whereby the wort is mixed with the palatinose-containing mixture or palatinose at a ratio of carbohydrate source, in particular malt, to palatinose of 2:1 to 1:1.

6. Method according to any one of the preceding claims, whereby the palatinose-containing mixture or the palatinose is added as syrup, in solution or in the form of a crystalline solid.

7. Method according to any one of the claims 1 to 6, whereby the fermentation is carried out as a mixed fermentation through the use of various microorganisms.

8. Method according to claim 7, whereby at least two microorganisms are used.

9. Method according to claim 7 or 8, whereby the fermentation is carried out through the use of at least one yeast and at least one acid-forming bacterium.

10. Method according to claim 9, whereby the acid-forming bacterium is selected from the group consisting of Lactobacillus sp., Acetobacter sp., and Gluconobacter sp..

11. Method according to any one of the claims 1 to 6, whereby the fermentation is carried by means of a single organism.

12. Low-alcohol or alcohol-free beer or beer-like soft drink, producible according to the method according to any one of the claims 1 to 11.

13. Low-alcohol beer or beer-like soft drink according to claim 12, whereby the soft drink is a light or dark beer or soft beer-like beverage.

14. Beer-mix beverage containing herb, aroma, caffeine, dye, amino acid, acid for consumption, acid and/or fruit component, as well as
a) a low-alcohol or alcohol-free beer or beer-like soft drink, producible according to any one of the claims 1 to 11, and a sugar component, in particular a sucrose-containing sugar component; or
b) low-alcohol or alcohol-free beer or beer-like soft drink according to any one of the claims 1 to 11, and palatinose or a palatinose-containing ingredient.

15. Functional beer-like beverage, producible according to any one of claims 1 to 11, containing microorganisms and palatinose.

## Revendications

1. Procédé pour la fabrication d'une bière pauvre en alcool ou sans alcool ou d'une boisson de refraîchissement semblable à la bière, dans lequel, dans une première étape, on prepare un condiment par mélanger de l'eau de brassage, de l' houblon et d'une source d'hydrate de carbone, dans une deuxième étape, on porte le condiment à l'ébullition et, dans une troisième étape, on sousmet le condiment à un procédé de fermentation, dans lequel un mélange contenant de la palatinose ou de la palatinose pure est ajouté avant, pendant et après le procédé de fermentation, **caractérisé en ce que**, pendant la fermentation, on utilise au moins un micro-organisme sélectionné du groupe de Sacccharomyces diastaticus et Brettanomyces intermedius.

2. Procédé selon la revendication 1, dans lequel la source d'hydrate de carbone est utilisée sous forme de céréales maltées ou d'un grain cru plus des céréales maltées.

3. Procédé selon l'une des revendications précédentes, dans lequel on fabrique une bière brune ou une bière blonde.

4. Procédé selon l'une des revendications précédentes, dans lequel on fabrique une bière à fermentation haute ou à fermentation basse.

5. Procédé selon l'une des revendications précédentes, dans lequel on mélange le condiment avec le mélange contenant de la palatinose ou de la palatinose pure dans un rapport de source d'hydrate de carbone, plus particulièrement le malt, à la palatinose de 2:1 à 1:1.

6. Procédé selon l'une des revendications précédentes, dans lequel on ajoute le mélange contenant de la palatinose ou de la palatinose pure comme sirop, comme solution ou sous forme de matière solide cristalline.

7. Procédé selon l'une des revendications précédentes, dans lequel le procédé de fermentation est réalisé sous forme de fermentation mixte en utilisant différents micro-organismes.

8. Procédé selon la revendication 7 dans lequel on utilise au moins deux micro-organismes.

9. Procédé selon la revendication 7 ou 8 dans lequel on réalise la fermentation en utilisant au moins une levure et au moins un acidificateur.

10. Procédé selon la revendication 9, dans lequel on sélectionne l'acidificateur du groupe consistant en Lactobillus sp., Acetobacter sp. et Gluconobacter sp..

11. Procédé selon l'une des revendications de 1 à 6, dans lequel la fermentation est réalisée au moyen d'un seul organisme.

12. De la bière pauvre en alcool ou sans alcool ou une boisson semblable à la bière, fabricable d'après l'une des revendications de 1 à 11.

13. De la bière pauvre en alcool ou d'une boisson de rafraîchissement semblable à la bière selon la revendication 12, dans laquelle il s'agit d'une bière ou d'une boisson semblable à la bière blonde ou brune.

14. Boisson de mélange à base de bière qui contient un composant d'herbes, d'arome, de caféine, de colorant, d'acide aminée, d'acide alimentaire, d'acide et/ou de fruit ainsi que
(a) une bière pauvre en alcool ou sans alcool ou d'une boisson de rafraîchissement semblable à la bière, fabricable d'après l'une des revendications de 1 à 11 et un composant de sucre, plus particulièrement un composant de sucre contenant du saccharose, ou
(b) une bière pauvre en alcool ou sans alcool ou d'une boisson de rafraîchissement semblable à la bière, d'après l'une des revendications de 1 à 11 et de la palatinose ou un ingrédient contenant de la palatinose.

15. Boisson fonctionnelle semblable à la bière, fabricable d'après le procédé selon l'une des revendications de 1 à 11 et contenant des micro-organismes et de la palatinose.
